# EUROPEAN PATENT APPLICATION

(11) **EP 2 101 046 A2**
(43) Date of publication of application: **16.09.2009**
(21) Application number: 08291129.8
(22) Date of filing: 28.11.2008
(51) Int. Cl.: F01N 3/021, F01N 3/28, B01D 46/24, B22F 3/11

(54) **Exhaust gas purification apparatus**

(30) Priority: 11.03.2008 WO PCT/JP2008/054405
(71) Applicant: Ibiden Co., Ltd., Ogaki-shi, Gifu 503-8604 (JP)
(72) Inventor: Komori, Teruo, Ibi-gun Gifu 501-0695 (JP)
(74) Representative: Uchida, Kenji

(57) **Abstract**

An object of the present invention is to provide an exhaust gas purification apparatus capable of preventing displacement and coming off of the honeycomb fired bodies of an aggregated honeycomb structured body; an exhaust gas purification apparatus (10) of the present invention comprises: a honeycomb structured body (40) formed by binding together a plurality of pillar-shaped honeycomb fired bodies (41), in which a large number of cells (45) separated by cell walls (46) are disposed in parallel in a longitudinal direction, by interposing an adhesive layer (42); a casing (30) to which an introduction pipe (20a) for introducing an exhaust gas and an exhaust pipe (20b) for discharging the exhaust gas are connected, the honeycomb structured body (40) being disposed in the interior of the casing (30); a holding sealing material (50) disposed between the honeycomb structured body (40) and the casing (30) for holding the honeycomb structured body; and a stopping member (60) having a plurality of openings (60a) and disposed in the casing, wherein of the end faces of the honeycomb structured body, at least an end face positioned on the exhaust pipe (20b) side is covered by the stopping member (60).

## Description

### TECHNICAL FIELD

The present invention relates to an exhaust gas purification apparatus.

### BACKGROUND ART

Conventionally, exhaust gas discharged from an internal combustion engine such as a diesel engine contains particulate matter (also referred to as PM hereafter), and in recent years, the harm that the PM causes to the environment and the human body has become a problem. The exhaust gas also contains harmful gas components such as CO, HC and NOx, and the harm that these harmful gas components cause to the environment and the human body has become a further problem.
Therefore, various exhaust gas purification apparatuses for capturing PM contained in exhaust gas and converting harmful gas components such as CO, HC and NOx contained in exhaust gas have been proposed. The exhaust gas purification apparatus of this kind comprises: a honeycomb structured body formed from a porous ceramic such as cordierite and silicon carbide; a casing in which the honeycomb structured body is disposed and which is connected to an introduction pipe connected to an internal combustion engine, through which exhaust gas is introduced, and an exhaust pipe connected to the outside, through which the exhaust gas is discharged; and a holding sealing material, which is disposed between the honeycomb structured body and the casing to prevent a gap from being formed between the honeycomb structured body and the casing, and which holds the honeycomb structured body.
In the present description, the function of the exhaust gas purification apparatus is purification, conversion, or purification and conversion.

However, in the exhaust gas purification apparatus of this kind, pressure (also referred to as exhaust gas pressure hereafter) is applied to the honeycomb structured body as the exhaust gas flows from the introduction pipe side to the exhaust pipe side, and as a result, the entire honeycomb structured body may move to the exhaust pipe side from its initial disposal position. In such a case, the honeycomb structured body collides with the casing such that the honeycomb structured body is damaged, leading to a reduction in PM capture efficiency, a reduction in harmful gas component conversion efficiency, an increase in pressure loss, and so on. As a result, the purification performance of the honeycomb structured body decreases dramatically.

In response to this problem, an exhaust gas purification apparatus that prevents collisions between the honeycomb structured body and the casing has been proposed (Patent Document 1, Patent Document 2).

Patent Document 1 discloses an exhaust gas purification apparatus in which a peripheral portion of an end face of a honeycomb structured body is fixed by a fixing member disposed in a casing such that the honeycomb structured body is held fixedly in the casing.

Patent Document 2 discloses an exhaust gas purification apparatus in which an end portion of the casing is formed in a cone shape and the cone-shaped end portion of the casing is brought into contact with the peripheral portion of the end face of the honeycomb structured body such that the honeycomb structured body is held fixedly in the casing.

Patent Document 1: JP-A H8-281034
Patent Document 2: JP-A 2000-45759

### DISCLOSURE OF THE INVENTION PROBLEMS TO BE SOLVED BY THE INVENTION

In the exhaust gas purification apparatus described in Patent Document 1, the honeycomb structured body seems to be held fixedly in the casing by a holding sealing material and the fixing member, and therefore collisions between the honeycomb structured body and the casing seems to be prevented.

In the exhaust gas purification apparatus described in Patent Document 2, the honeycomb structured body seems to be held by a holding sealing material and fixed by the contact between the cone-shaped end portion of the casing and the peripheral portion of the end face of the honeycomb structured body, and therefore collisions between the honeycomb structured body and the casing seems to be prevented.

However, in the exhaust gas purification apparatuses described in Patent Document 1 and Patent Document 2, the following problem occurs when a honeycomb structured body (also referred to as an aggregated honeycomb structured body hereafter) formed by binding together a plurality of pillar-shaped honeycomb fired bodies, each of which includes a large number of cells disposed in parallel in a longitudinal direction and separated by cell walls, by interposing an adhesive layer is used as the honeycomb structured body.

An aggregated honeycomb structured body is manufactured by adhering a plurality of honeycomb fired bodies, each of which is formed by molding a wet mixture into a predetermined shape and then firing the wet mixture, to each other using an adhesive, and then carrying out drying, solidifying, and so on. The strength of the dried and solidified adhesive layer is lower than that of the honeycomb fired body. Therefore, when exhaust gas pressure is applied to the aggregated honeycomb structured body, cracks may form in the adhesive layer.
When a regenerating process or the like for removing PM is carried out while the adhesive layer is cracked, the crack may develop due to thermal shock, causing the adhesive layer to break, and as a result, a part of the honeycomb fired bodies bound together by the cracked adhesive layer may be pushed and moved toward the exhaust pipe side from the aggregated honeycomb structured body. When the honeycomb fired body moves dramatically (also referred to hereafter as displacement of the honeycomb fired body), a reduction in the purification performance of the aggregated honeycomb structured body may occur. Furthermore, when the moved honeycomb fired body is pushed out of the aggregated honeycomb structured body, the honeycomb fired bodies may be come off. It is therefore desirable to prevent displacement and coming off of the honeycomb fired bodies.

An object of the present invention is to provide an exhaust gas purification apparatus capable of preventing displacement and coming off of the honeycomb fired bodies of an aggregated honeycomb structured body.

### MEANS FOR SOLVING THE PROBLEMS

For achieving the above object, the exhaust gas purification apparatus described in claim 1 comprises: a honeycomb structured body formed by binding together a plurality of pillar-shaped honeycomb fired bodies, in which a large number of cells separated by cell walls are disposed in parallel in a longitudinal direction, by interposing an adhesive layer; a casing to which an introduction pipe for introducing an exhaust gas and an exhaust pipe for discharging the exhaust gas are connected, the honeycomb structured body being disposed in the interior of the casing; a holding sealing material disposed between the honeycomb structured body and the casing for holding the honeycomb structured body; and a stopping member having a plurality of openings and disposed in the casing, wherein of end faces of the honeycomb structured body, at least an end face positioned on the exhaust pipe side is covered by the stopping member.

In the exhaust gas purification apparatus described in claim 1, of the end faces of the honeycomb structured body, at least the end face positioned on the exhaust pipe side is covered by the stopping member.
Therefore, even when exhaust gas pressure is applied to the honeycomb structured body, movement of a honeycomb fired body from the honeycomb structured body to the exhaust pipe side can be prevented. Moreover, even when a honeycomb fired body moves, the moving honeycomb fired body is stopped upon contact with the stopping member.
Hence, displacement and coming off of the honeycomb fired bodies can be prevented.

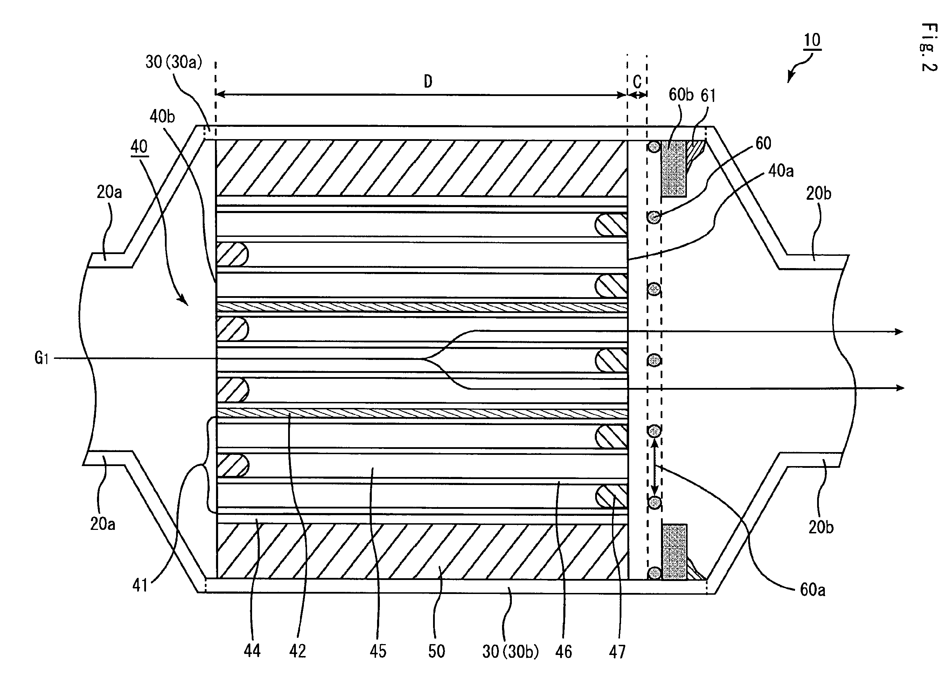

Note that in this description, the phrase "the exhaust pipe side end face of the aggregated honeycomb structured body is covered by the stopping member" means that when seen from the exhaust pipe side, the entire exhaust pipe side end face of the aggregated honeycomb structured body overlaps the end face of the stopping member. In this case, the distance (shown by a double-headed arrow C in Fig. 2, to be described below) between the exhaust pipe side end face of the aggregated honeycomb structured body and the end face of the stopping member is shorter than a longitudinal direction length (shown by a double-headed arrow D in Fig. 2) of the honeycomb fired body. In other words, the exhaust pipe side end face of the aggregated honeycomb structured body and the end face of the stopping member are either removed from each other within a shorter range than the longitudinal direction length of the honeycomb fired body, or in contact with each other.
Furthermore, in this description, displacement of the honeycomb fired body indicates a case in which a distance from the end face of the aggregated honeycomb structured body to the end face of the projecting honeycomb fired body is 5 mm or more.

The exhaust gas purification apparatus described in claim 2 further comprises a fixing member used for fixing the stopping member and disposed in the casing. Therefore, the stopping member is unlikely to shift from its initial disposal position.
Hence, even when exhaust gas pressure is applied to the honeycomb structured body, movement of a honeycomb fired body from the honeycomb structured body to the exhaust pipe side can be prevented reliably. Moreover, even when a honeycomb fired body moves, the moving honeycomb fired body is stopped reliably upon contact with the stopping member. As a result, displacement and coming off of the honeycomb fired bodies can be prevented efficiently.

In the exhaust gas purification apparatus described in claim 3, the stopping member is joined to the fixing member.
Therefore, the stopping member is unlikely to shift from its initial position. Accordingly, contact is unlikely to occur between the stopping member and the end face (exhaust pipe side end face) of the honeycomb structured body.
Hence, damage such as chips and cracks can be prevented from occurring on the end face (exhaust pipe side end face) of the honeycomb structured body on which damage is particularly likely to occur.
As a result, a reduction in the purification performance of the honeycomb structured body can be prevented.

In the exhaust gas purification apparatus described in claim 4, the stopping member is joined to the casing. Therefore, the stopping member is unlikely to shift from its initial disposal position.
Hence, even when exhaust gas pressure is applied to the honeycomb structured body, movement of a honeycomb fired body from the honeycomb structured body to the exhaust pipe side can be prevented. Moreover, even when a honeycomb fired body moves, the moving honeycomb fired body is stopped upon contact with the stopping member. As a result, displacement and coming off of the honeycomb fired bodies can be prevented efficiently.

The exhaust gas purification apparatus described in claim 5 further comprises a buffer member disposed between the honeycomb structured body and the stopping member.
In the exhaust gas purification apparatus described in claim 5, the exhaust pipe side end face of the honeycomb structured body contacts the buffer member having a buffering function, and therefore, even when exhaust gas pressure is applied such that the entire honeycomb structured body moves from its initial disposal position to the exhaust pipe side, shock such as vibration is unlikely to be applied to the exhaust pipe side end face of the honeycomb structured body.
Hence, with the exhaust gas purification apparatus described in claim 5, damage can be prevented from occurring on the end face (exhaust pipe side end face) of the honeycomb structured body on which damage is particularly likely to occur.
As a result, a reduction in the purification performance of the honeycomb structured body can be prevented efficiently.

In the exhaust gas purification apparatus described in claim 6, the honeycomb structured body is a honeycomb filter in which one of end portions of each of the cells is sealed.
Hence, with the exhaust gas purification apparatus described in claim 6, PM contained in the exhaust gas can be removed.

In the exhaust gas purification apparatus described in claim 7, the honeycomb structured body is a catalyst supporting carrier in which the one of end portions of each of the cells is not sealed.
With the exhaust gas purification apparatus described in claim 7, harmful gas components such as CO, HC and NOx contained in the exhaust gas can be converted by bringing the catalyst into contact with these harmful gas components contained in the exhaust gas.

In the exhaust gas purification apparatus described in claim 8, a catalyst is supported on the honeycomb structured body (honeycomb filter or catalyst supporting carrier).
Hence, during a regenerating process, the activation energy required to burn the PM captured in the honeycomb filter can be reduced through contact between the PM and the catalyst. As a result, the captured PM can be burned at a lower temperature. Moreover, by bringing the catalyst into contact with harmful gas components such as CO, HC and NOx contained in the exhaust gas, these harmful gas components contained in the exhaust gas can be converted.

In the exhaust gas purification apparatus described in claim 9, a plurality of honeycomb structured bodies are disposed in the casing, and of end faces of each of the honeycomb structured bodies, at least an end face positioned on the exhaust pipe side is covered by the stopping member.
With the exhaust gas purification apparatus described in claim 9, movement of a part of the honeycomb fired bodies of one honeycomb structured body to the exhaust pipe side can be prevented even when exhaust gas pressure is applied. Moreover, even when a honeycomb fired body moves, the moving honeycomb fired body is stopped upon contact with the stopping member. Hence, a part of the honeycomb fired bodies of the one honeycomb structured body is never pushed out to the exhaust pipe side.
Accordingly, the honeycomb fired body is unlikely to collide with another honeycomb structured body disposed downstream of the one honeycomb structured body, and therefore damage to the another honeycomb structured body can be prevented. As a result, a reduction in the purification performance of the another honeycomb structured body can be prevented.

In the exhaust gas purification apparatus described in claim 10, the plurality of honeycomb structured bodies include at least one honeycomb filter and at least one catalyst supporting carrier, and the catalyst supporting carrier is disposed further toward the introduction pipe side than the honeycomb filter.
Therefore, heat generated when the catalyst supporting carrier converts harmful gas components contained in the exhaust gas can be used easily during PM combustion in the honeycomb filter positioned downstream of the catalyst supporting carrier. Hence, with the exhaust gas purification apparatus described in claim 10, PM contained in the exhaust gas can be removed extremely efficiently.

In the exhaust gas purification apparatus described in claim 11, a distance between an end face of the honeycomb structured body and an end face of the stopping member is less than 1 mm.
Therefore, when exhaust gas pressure is applied such that a part of the honeycomb fired bodies of the honeycomb structured body is pushed out to the exhaust pipe side, the pushed-out honeycomb fired body never projects from the end face of the honeycomb structured body to the exhaust pipe side by 1 mm or more.
Hence, with the exhaust gas purification apparatus described in claim 11, a reduction in purification performance due to displacement of the honeycomb fired body can be prevented more efficiently.

### BEST MODE FOR CARRYING OUT THE INVENTION

The above, and the other objects, features and advantages of the present invention will be made apparent from the description of preferred embodiments, given as non-limiting examples, with reference to the accompanying drawings in which:
Fig. 1 is a schematic cut-away perspective view showing an exhaust gas purification apparatus according to the first embodiment;
Fig. 2 is a schematic cross-sectional view showing a cross-section of the exhaust gas purification apparatus according to the first embodiment cut parallel to a longitudinal direction;
Fig. 3 is a schematic perspective view showing the honeycomb filter of the exhaust gas purification apparatus according to the first embodiment;
Fig. 4(a) is a schematic perspective view showing a honeycomb fired body of the honeycomb filter shown in Fig. 3;
Fig. 4(b) is an A-A line cross-sectional view of the honeycomb fired body shown in Fig. 4(a);
Fig. 5(a) is a schematic perspective view showing the stopping member of the exhaust gas purification apparatus according to the first embodiment;
Fig. 5(b) is a schematic perspective view showing the holding sealing material of the exhaust gas purification apparatus according to the first embodiment;
Fig. 6 is a schematic perspective view showing a state in which the honeycomb filter and the stopping member and holding sealing material shown in Figs. 5(a) and 5(b) are disposed in the casing to which the introduction pipe and exhaust pipe are connected;
Fig. 7 is a schematic cross-sectional view showing a cross-section of the exhaust gas purification apparatus according to the second embodiment cut parallel to the longitudinal direction;
Fig. 8(a) is a schematic perspective view showing the buffer member of the exhaust gas purification apparatus according to the second embodiment;
Fig. 8(b) is a schematic perspective view showing the fixing member of the exhaust gas purification apparatus according to the second embodiment;
Fig. 9 is a schematic perspective view showing a state in which the honeycomb filter, the holding sealing material, the stopping member, and the buffer member and fixing member shown in Figs. 8 (a) and 8 (b) are disposed in the casing to which the introduction pipe and exhaust pipe are connected;
Fig. 10 (a) is a schematic perspective view showing a casing and a fixing member of the exhaust gas purification apparatus according to the fourth embodiment;
Fig. 10(b) is a schematic side view showing the casing and the fixing member shown in Fig. 10(a); and

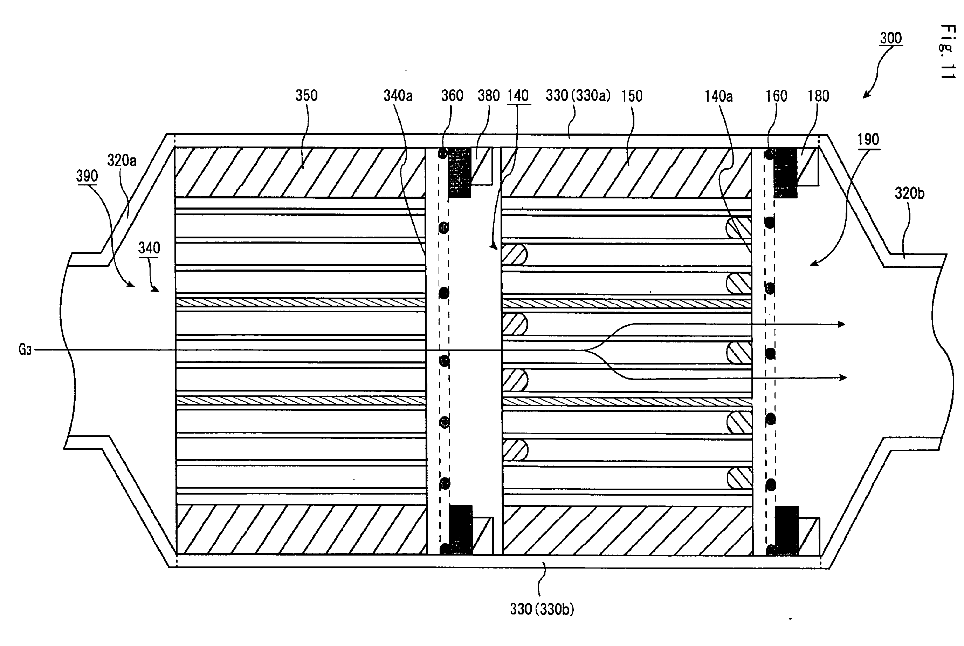

Fig. 11 is a schematic cross-sectional view showing a cross-section of the exhaust gas purification apparatus according to the seventh embodiment cut parallel to the longitudinal direction, wherein: 10, 100, 300... Exhaust gas purification apparatus; 20a, 120a, 320a... Introduction pipe; 20b, 120b, 320b... Exhaust pipe; 30, 130, 330...Casing; 40, 140, 340 Honeycomb structured body (Aggregated honeycomb structured body); 40a, 140a, 340a... Exhaust pipe side end face; 45, 145... Cell; 46, 146... Cell wall; 41, 141...Honeycomb fired body; 42, 142... Adhesive layer; 50, 150, 350... Holding sealing material; 60, 160, 360... Stopping member; and 60a, 160a... Opening.

(First Embodiment)
A first embodiment serving as an embodiment of the present invention will be described below using the drawings.

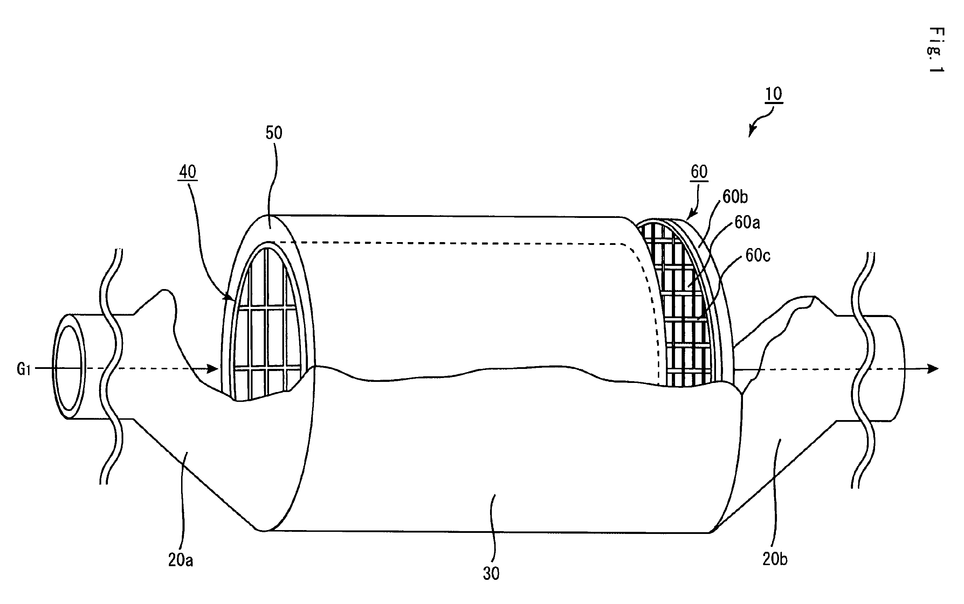

Fig. 1 is a schematic cut-away perspective view showing an exhaust gas purification apparatus according to the first embodiment.
Fig. 2 is a schematic cross-sectional view showing a cross-section of the exhaust gas purification apparatus according to the first embodiment cut parallel to a longitudinal direction.
Note that in the first embodiment, a honeycomb filter is used as an aggregated honeycomb structured body.

As shown in Figs. 1 and 2, in an exhaust gas purification apparatus 10 according to the first embodiment, the interior of a cylindrical casing 30, to which an introduction pipe 20a through which exhaust gas discharged from an internal combustion engine is introduced and an exhaust pipe 20b through which the exhaust gas is discharged to the outside after passing through the exhaust gas purification apparatus are connected, is provided with a honeycomb filter 40, a holding sealing material 50 disposed between the honeycomb filter 40 and the casing 30 to hold the honeycomb filter 40, and a stopping member 60 that covers an end face (also referred to as an exhaust pipe side end face hereafter) of the honeycomb filter 40 positioned on the exhaust pipe 20b side, has a plurality of openings 60a, and is joined to the casing 30.

Further, a distance C (see Fig. 2) between the exhaust pipe side end face 40a of the honeycomb filter 40 and an end face of the stopping member 60 is less than 1 mm.

A joint portion 60b mainly comprising metal is provided near the periphery of the stopping member 60, and by welding the joint portion 60b to the casing 30, the stopping member 60 and the casing 30 are joined to each other (in Fig. 2, the welded part between the joint portion 60b and the casing 30 is indicated by 61).

A case in which exhaust gas passes through the exhaust gas purification apparatus 10 having the configuration described above will be described below using Fig. 2.
As shown in Fig. 2, exhaust gas introduced through the introduction pipe 20a (in Fig. 2, the exhaust gas is indicated by G₁ and the flow of the exhaust gas is indicated by arrows) flows into one cell 45 that opens onto an end face 40b of the honeycomb filter 40 positioned on the introduction pipe side, and passes through a cell wall 46 separating the cell 45. At this time, PM in the exhaust gas is captured in the cell wall 46, and as a result, the exhaust gas is purified. The purified exhaust gas flows out through another cell 45 opening onto the exhaust pipe side end face 40a, passes through the opening 60a in the stopping member 60, and is discharged to the outside through the exhaust pipe 20b.

In the exhaust gas purification apparatus 10 of the first embodiment, PM contained in the exhaust gas is purified in the manner described above. At the same time, however, pressure generated by the exhaust gas G₁ is applied to the honeycomb filter 40.

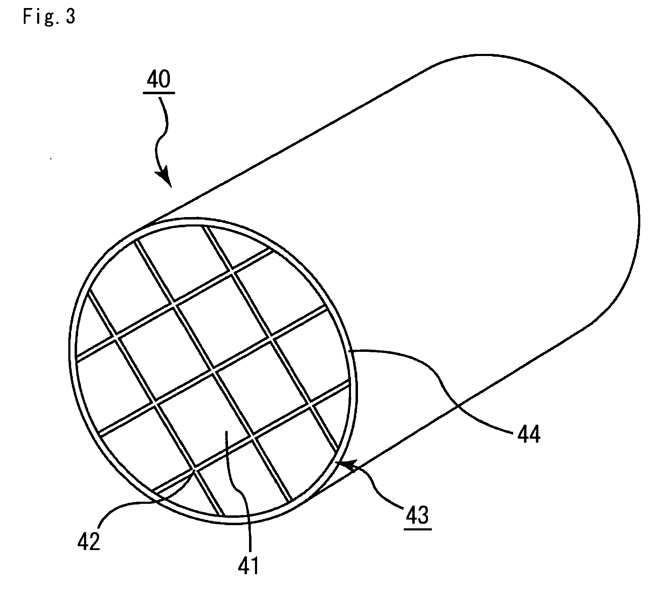

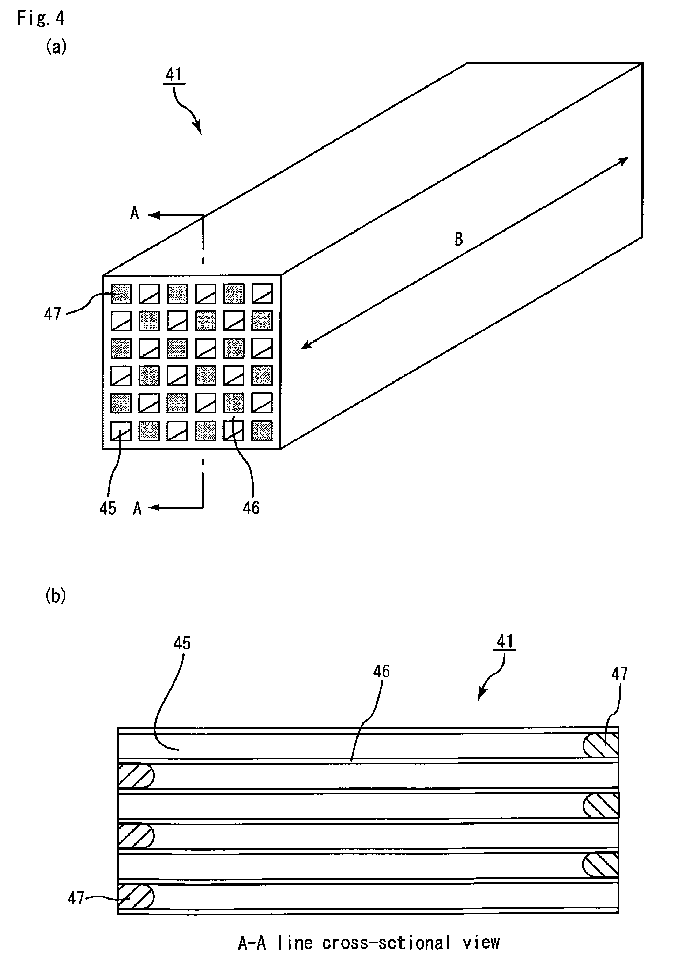

The honeycomb filter and each member forming the exhaust gas purification apparatus 10 will be described below using the drawings.
First, the honeycomb filter 40 will be described using Figs. 3, 4 (a) and 4(b).
Fig. 3 is a schematic perspective view showing the honeycomb filter of the exhaust gas purification apparatus according to the first embodiment.
Fig. 4(a) is a schematic perspective view showing a honeycomb fired body of the honeycomb filter shown in Fig. 3, and Fig. 4(b) is an A-A line cross-sectional view of the honeycomb fired body shown in Fig. 4(a).

As shown in Fig. 3, in the honeycomb filter 40, a plurality of honeycomb fired bodies 41 such as that shown in Fig. 4(a) are bound together by interposing an adhesive layer 42 to form a ceramic block 43, and a coat layer 44 is formed on the periphery of the ceramic block 43.
Further, as shown in Fig. 4(b), in the honeycomb fired body 41, a large number of cells 45 separated by cell walls 46 are disposed in parallel in a longitudinal direction (indicated in Fig. 4(a) by a double-headed arrow B), and one of end portions of each cell 45 is sealed by a plug 47. Thus, the cell wall 46 functions as a filter.

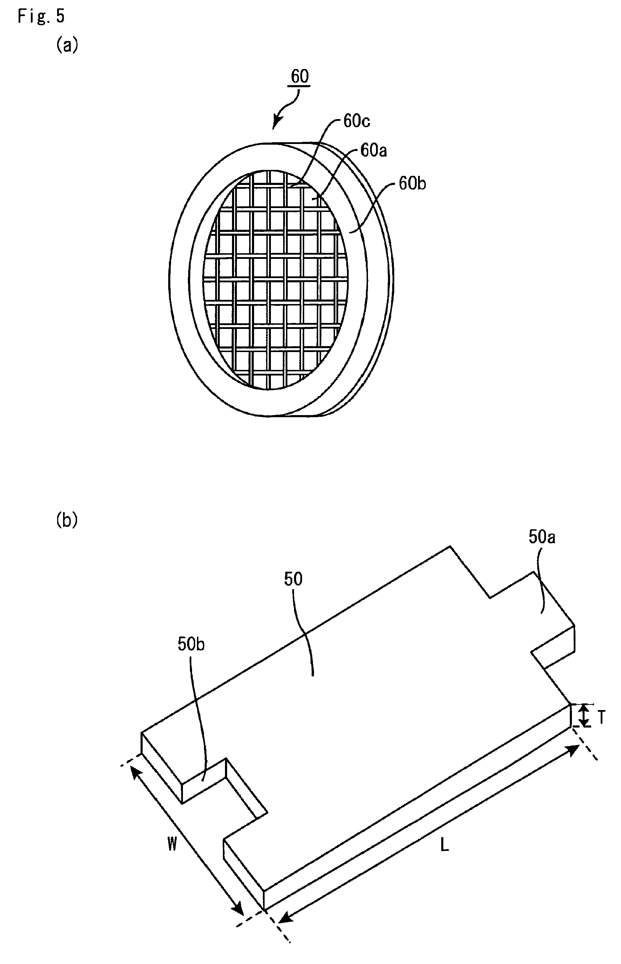

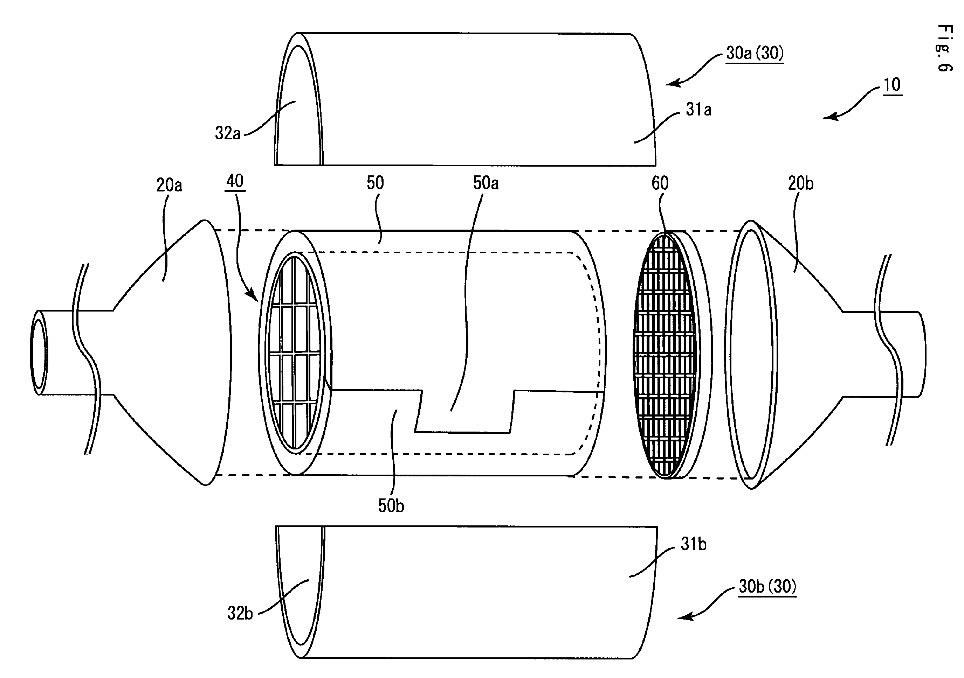

Next, the stopping member, holding sealing material, casing, introduction pipe, and exhaust pipe will be described using Figs. 5(a), 5(b) and 6.
Fig. 5(a) is a schematic perspective view showing the stopping member of the exhaust gas purification apparatus according to the first embodiment, and Fig. 5 (b) is a schematic perspective view showing the holding sealing material of the exhaust gas purification apparatus according to the first embodiment.
Fig. 6 is a schematic perspective view showing a state in which the honeycomb filter and the stopping member and holding sealing material shown in Figs. 5(a) and 5(b) are disposed in the casing to which the introduction pipe and exhaust pipe are connected.

First, the stopping member 60 will be described. As shown in Fig. 5(a), the stopping member 60 is disc-shaped and comprises wire mesh formed by knitting a metal wire 60c having a predetermined wire diameter. Further, the diameter of an end face of the stopping member 60 is substantially identical to an inner diameter of the casing 30 shown in Fig. 6. The plurality of openings (apertures) 60a, which have a quadrangular shape when seen from above, are formed over substantially the entire end face, and each opening 60a penetrates from one end face of the stopping member 60 to the other end face thereof.
The size of the opening 60a is sufficiently larger than that of the cells on a perpendicular cross-section to the longitudinal direction of the honeycomb fired body of the honeycomb filter 40.
Further, the joint portion 60b mainly comprising metal is provided near the periphery of the stopping member 60.

An aperture ratio of the stopping member 60 is preferably 65% to 95%, and more preferably 70% to 90%.
When the aperture ratio is less than 65%, the exhaust gas tends not to pass easily, leading to an increase in pressure loss.
When the aperture ratio is more than 95%, on the other hand, a strength deficiency may occur. As a result, when a honeycomb fired body or the entire honeycomb filter is moved to the exhaust pipe side by the exhaust gas pressure, it may become impossible to stop the honeycomb fired body or the entire honeycomb filter reliably.
When the aperture ratio is 70% to 90%, the exhaust gas passes more easily, and therefore pressure loss can be reduced. Moreover, sufficient strength can be ensured, and therefore the honeycomb fired body or the entire honeycomb filter can be stopped more reliably.

Next, the holding sealing material 50 will be described. The holding sealing material 50 shown in Fig. 5(b) mainly comprises inorganic fibers such as alumina fibers, and has a substantially rectangular outer shape. The length of the holding sealing material 50 (indicated by a double-headed arrow L in Fig. 5(b)) is substantially identical to the length of the periphery of the honeycomb filter 40 shown in Fig. 6, and the width (indicated by a double-headed arrow W in Fig. 5(b)) is substantially identical to the longitudinal direction length of the honeycomb filter 40. Further, the holding sealing material 50 has a predetermined thickness (indicated by a double-headed arrow T in Fig. 5(b)).
Of the end faces of the holding sealing material 50 that are parallel to the width direction, a projected portion 50a is provided on one end face and a recessed portion 50b is provided on the other end face. The projected portion 50a and the recessed portion 50b are formed to fit together when the holding sealing material 50 is wrapped around the periphery of the honeycomb filter 40, as shown in Fig. 6.

Next, the casing 30 will be described. The casing 30 shown in Fig. 6 is a so-called clamshell-type casing having a cylindrical shape and formed mainly by a metal such as stainless steel. More specifically, the casing 30 is formed from two casing divided bodies 30a and 30b, each of which has a U-shaped cross-section obtained by dividing the casing 30 parallel to the longitudinal direction thereof, and includes an inner face 31a (31b) and an outer face 32a (32b). An inner diameter of the casing 30 is slightly shorter than a length obtained by combining the diameter of the end face of the honeycomb filter 40 and the thickness of the holding sealing material 50 when wrapped around the honeycomb filter 40, and the length of the casing 30 is slightly greater than the longitudinal direction length of the honeycomb filter 40.

Finally, the introduction pipe 20a and exhaust pipe 20b will be described.
The introduction pipe 20a mainly comprises a metal such as stainless steel, and takes a cylindrical shape. As shown in Fig. 6, an outer diameter (inner diameter) of one end face is substantially identical to the outer diameter (inner diameter) of the casing 30. The outer diameter (inner diameter) of the other end face is smaller than the outer diameter (inner diameter) of the end face of the casing 30. Further, in the neighborhood of one end face, the introduction pipe 20a takes a tapered shape that decreases the diameter from one end face side toward the other end face side.
If necessary, the other end face of the introduction pipe 20a is connected to the internal combustion engine via an exhaust gas pipe further connected to the introduction pipe 20a.
The exhaust pipe 20b is configured similarly to the introduction pipe 20a, except that the other end face is connected to the outside.

A method for manufacturing the exhaust gas purification apparatus according to the first embodiment will now be described.
First, a method for manufacturing the honeycomb filter will be described.
First, silicon carbide powders each having a different average particle diameter are mixed, and an organic binder such as carboxymethyl cellulose and a dispersion medium such as water are added thereto and then kneaded, whereupon a plasticizer such as glycerin, a lubricant such as polyoxyethylene monobutyl ether, a forming auxiliary such as ethylene glycol, and so on are added and kneaded to form a wet mixture. Extrusion molding is then carried out using the wet mixture to manufacture a raw molded body.

Next, the raw molded body is dried and then a paste having a similar composition to the raw molded body described above is filled into a predetermined cell of a ceramic dried body, whereupon drying and degreasing are carried out. Firing is then carried out, and thus a honeycomb fired body of a predetermined size, in which one of end portions of each cell is sealed, is manufactured.

Next, using a heat-resistant adhesive paste containing inorganic fibers such as alumina fibers, inorganic particles such as silicon carbide powder, an inorganic binder such as silica sol, an organic binder such as carboxymethyl cellulose, water, and so on, a large number of the honeycomb fired bodies described above are bound together and then dried, hardened, and cut to manufacture a ceramic block.

Next, inorganic fibers comprising alumina silicate or the like, inorganic particles such as silicon carbide powder, an inorganic binder such as silica sol, an organic binder such as carboxymethyl cellulose, water, and so on are kneaded to prepare a sealing material paste (a coat layer paste).

Using the sealing material paste (coat layer paste) described above, a sealing material layer (coat layer) is formed on the periphery of the ceramic block, whereupon the sealing material layer (coat layer) is dried, resulting in manufacturing of a honeycomb filter taking the form of a round pillar-shaped aggregated honeycomb structured body, in which one of end portions of each cell is sealed.

Next, a mat material mainly comprising inorganic fibers such as alumina fibers is cut to manufacture a holding sealing material having a substantially rectangular shape of a predetermined size, in which, of the end faces thereof that are parallel to the width direction, a projected portion is formed on one end face and a recessed portion having a shape that fits the projected portion is formed on the other end face.

Further, wire mesh is manufactured by cutting wire mesh having a predetermined mesh, wire diameter, and aperture ratio into a disc shape such that the diameter of an end face thereof is substantially identical to the inner diameter of the casing. Next, a joint member having an outer diameter that is substantially identical to the inner diameter of the casing and an inner diameter that is substantially identical to the diameter of the end face of the honeycomb filter is manufactured by carrying out a punching process on a disc-shaped metal plate mainly comprising a metal such as stainless steel. This joint member is placed over the disc-shaped wire mesh and then welded to the wire mesh, whereby a stopping member formed with a joint portion is manufactured.

A method for manufacturing an exhaust gas purification apparatus using the honeycomb filter and the various members described above will now be described.
First, the holding sealing material is wrapped around the periphery of the honeycomb filter such that the recessed portion and projected portion of the holding sealing material are fitted together. Next, a first casing divided body is disposed such that the inner face thereof is oriented upward, and the honeycomb filter wrapped in the holding sealing material is disposed on the inner face of the first casing divided body. Further, the stopping member is disposed adjacent to one end face of the honeycomb filter. At this time, the stopping member is disposed such that, of the end faces thereof, the end face not formed with the joint portion is disposed on the honeycomb filter side.
Thus, the respective lower halves of the honeycomb filter and the stopping member are disposed on the first casing divided body.

Next, a second casing divided body is placed on the respective upper halves of the honeycomb filter and the stopping member disposed on the first casing divided body, whereupon the casing divided bodies are compressed from a vertical direction. Once the casing divided bodies come into contact, the casing divided bodies are joined by welding to form the casing. Note that a joining device such as a screw or a predetermined fitting may be used instead of welding.

Next, the casing is joined to the joint portion of the stopping member by welding. Note that a joining device such as a screw or a predetermined fitting may be used instead of welding.

Next, the exhaust pipe is connected to the end portion of the casing that is positioned on the stopping member disposal side by welding. Similarly, the introduction pipe is connected to the end portion of the casing on the opposite side to the exhaust pipe connection side.
Through the processes described above, the exhaust gas purification apparatus according to the first embodiment is manufactured.

Effects of the exhaust gas purification apparatus according to the first embodiment will be cited below. (1) In the exhaust gas purification apparatus according to the first embodiment, the exhaust pipe side end face of the honeycomb filter is covered by the stopping member.
Therefore, in a case where the exhaust pipe side end face of the honeycomb filter and the end face of the stopping member come into contact, a honeycomb fired body can be prevented from moving to the exhaust pipe side from the honeycomb filter even when exhaust gas pressure is applied to the honeycomb filter.
Further, in a case where the exhaust pipe side end face of the honeycomb filter and the end face of the stopping member are disposed at a remove, the honeycomb fired body is stopped upon contact with the stopping member even when a honeycomb fired body moves.
Hence, in the exhaust gas purification apparatus according to the first embodiment, the honeycomb fired body is not displaced from the honeycomb filter to the exhaust pipe side. Moreover, the honeycomb fired body is not pushed out from the honeycomb filter, and therefore coming off of the honeycomb fired body can be prevented.

Note that when exhaust gas pressure is applied to the honeycomb filter, the entire honeycomb filter may move from its initial disposal position to the exhaust pipe side. As described above, however, the exhaust pipe side end face of the honeycomb filter is covered by the stopping member. Therefore, in a case where the exhaust pipe side end face of the honeycomb filter and the end face of the stopping member are disposed in contact with each other, the honeycomb filter can be reliably prevented from moving to the exhaust pipe side.
Furthermore, in a case where the exhaust pipe side end face of the honeycomb filter and the end face of the stopping member are disposed at a remove, the exhaust pipe side end face of the moving honeycomb filter comes into contact with the stopping member such that the entire honeycomb filter is stopped even when the entire honeycomb filter moves to the exhaust pipe side. Thus, collisions between the honeycomb filter and the casing can be prevented, and as a result, damage to the entire honeycomb filter can be prevented.

(2) In the exhaust gas purification apparatus according to the first embodiment, the stopping member is joined to a predetermined position in the casing such that the stopping member is unlikely to shift from its initial disposal position. Therefore, even when exhaust gas pressure is applied to the honeycomb filter, a honeycomb fired body can be prevented from moving from the honeycomb filter to the exhaust pipe side. Moreover, even when a honeycomb fired body moves, the moving honeycomb fired body is stopped upon contact with the stopping member. Hence, displacement and coming off of the honeycomb fired bodies can be prevented efficiently.

(3) In the exhaust gas purification apparatus according to the first embodiment, the distance between the end face of the honeycomb filter and the end face of the stopping member is less than 1 mm, and therefore a pushed-out honeycomb fired body does not project from the end face of the honeycomb filter toward the exhaust pipe side by 1 mm or more.
Hence, a reduction in the purification performance caused by displacement of the honeycomb fired body can be prevented even more efficiently.

Specific examples of the first embodiment of the present invention are illustrated below. However, the first embodiment is not limited to these examples alone.

(Example 1)
(1) Manufacture of honeycomb filter
(1-1) Raw molded body manufacturing process
An amount of 60% by weight of α-type silicon carbide powder having an average particle diameter of 11 µm and 40% by weight of α-type silicon carbide powder having an average particle diameter of 0.5 µm were mixed. To 100 parts by weight of the obtained mixture were added 5 parts by weight of an organic binder (carboxymethyl cellulose) and 10 parts by weight of water serving as a dispersion medium and then kneaded. Small amounts of a plasticizer (glycerin) and a lubricant (UNILUB, manufactured by NOF Corp.) were then added and kneaded to form a wet mixture, whereupon extrusion molding was carried out to manufacture a raw molded body.

(1-2) Honeycomb fired body manufacturing process
Next, the raw molded body was dried using a microwave drying apparatus or the like to form a ceramic dried body, whereupon a paste having a similar composition to the raw molded body was filled into a predetermined cell. Drying was then carried out again using the drying apparatus, whereupon degreasing was carried out at 400°C and firing was carried out for three hours at 2200°C in a normal-pressure argon atmosphere. As a result, a honeycomb fired body having a porosity of 42%, an average pore diameter of 9 µm, a size of 34.3 mm × 34.3 mm × 150 mm, a cell density of 23. 3 pcs/cm², and a cell wall thickness of 0.4 mm was manufactured.

(1-3) Ceramic block manufacturing process
A large number of the honeycomb fired bodies were bound using a heat-resistant adhesive paste containing 30% by weight of alumina fibers having an average fiber length of 20 µm, 21% by weight of silicon carbide powder having an average particle diameter of 0.6 µm, 15% by weight of silica sol (SiO₂ solids content: 30% by weight), 5.6% by weight of carboxymethyl cellulose, and 28.4% by weight of water. The bound honeycomb fired bodies were dried at 120°C and then cut using a diamond cutter to manufacture a round pillar-shaped ceramic block.

(1-4) Sealing material paste manufacturing process
Next, 23.3% by weight of alumina silicate fibers (average fiber length: 50 µm), 30.2% by weight of silicon carbide powder having an average particle diameter of 0.3 µm, 7% by weight of silica sol (SiO₂ solids content: 30% by weight), 0.5% by weight of carboxymethyl cellulose, and 39% by weight of water were kneaded together to prepare a sealing material paste.

(1-5) Sealing material layer formation process
Next, a sealing material layer having a thickness of 0.2 mm was formed on the periphery of the ceramic block using the sealing material paste. The sealing material layer was then dried at 120°C to manufacture a honeycomb filter taking the form of a round pillar-shaped aggregated honeycomb structured body of diameter 143.8 mm × length 150 mm, in which one of end portions of each cell was sealed.

(2) Manufacture of holding sealing material
A non-expansive alumina fiber mat (MAFTEC, manufactured by Mitsubishi Chemical Corp.) was cut to manufacture a holding sealing material at a size of length 452 mm × width 150 mm × thickness 8 mm, in which a projected portion was formed on one of the end faces parallel to the width direction and a recessed portion shaped to fit into the projected portion was formed in a part of the other end portion.

(3) Manufacture of stopping member
Disc-shaped wire mesh having a diameter of 152 mm was manufactured by cutting 16-mesh (the "mesh" represents the number of openings in 1 inch (25.4 mm)) plain weave wire mesh having a wire diameter of 0.2 mm and an aperture ratio of 76.6%. Further, a joint member of outer diameter 152 mm (inner diameter 143.8 mm) × thickness 4 mm was manufactured by carrying out a punching process on a disc-shaped metal plate mainly comprising a metal such as stainless steel. The joint member was then placed over the disc-shaped wire mesh and welded to the wire mesh, whereby a stopping member formed with a joint portion was manufactured.

(4) Manufacture of exhaust gas purification apparatus
The holding sealing material manufactured in Process (2) was wrapped around the periphery of the honeycomb filter manufactured in Process (1) such that the recessed portion and projected portion fitted together. Next, a first stainless steel casing divided body having a U-shaped cross-section and including an inner face and an outer face was prepared by dividing a cylindrical body mainly comprising stainless steel parallel to the longitudinal direction, and the first casing divided body was disposed such that the inner face of the first casing divided body was oriented upward. In this state, the honeycomb filter wrapped in the holding sealing material was disposed on the inner face of the first casing divided body.

Next, the stopping member manufactured in Process (3) was disposed adjacent to one end face of the honeycomb filter. At this time, the stopping member was disposed such that, of the end faces of the stopping member, the end face not formed with the joint portion was provided on the honeycomb filter side.
Next, a second casing divided body was placed on the first casing divided body provided with the honeycomb filter and the stopping member, whereupon the casing divided bodies were compressed from a vertical direction. When the casing divided bodies came into contact, the casing divided bodies were joined by welding to form a casing. Further, the casing was joined to the joint portion of the stopping member by welding.

Next, an exhaust pipe comprising stainless steel and formed in a tapered shape was disposed on the end portion of the casing on the stopping member disposal side and connected to the end portion of the casing by welding. Similarly, an introduction pipe shaped identically to the exhaust pipe was connected to the end portion of the casing on the opposite side to the exhaust pipe connection side.
Through the processes described above, the exhaust gas purification apparatus according to Example 1 was manufactured.
Note that in the exhaust gas purification apparatus manufactured in this manner, the distance between the exhaust pipe side end face of the honeycomb filter and the end face of the stopping member was 0.5 mm.

In the exhaust gas purification apparatus of Example 1, the exhaust pipe side end face of the honeycomb filter is covered by the stopping member and the stopping member is joined to a predetermined position in the casing, and therefore the stopping member is unlikely to shift from its initial disposal position. It may therefore be assumed that even when exhaust gas pressure is applied, displacement and coming off of the honeycomb fired bodies can be prevented efficiently.
Furthermore, the distance between the end face of the honeycomb filter and the end face of the stopping member is less than 1 mm. It may therefore be assumed that a reduction in the purification performance of the honeycomb filter can be prevented efficiently.

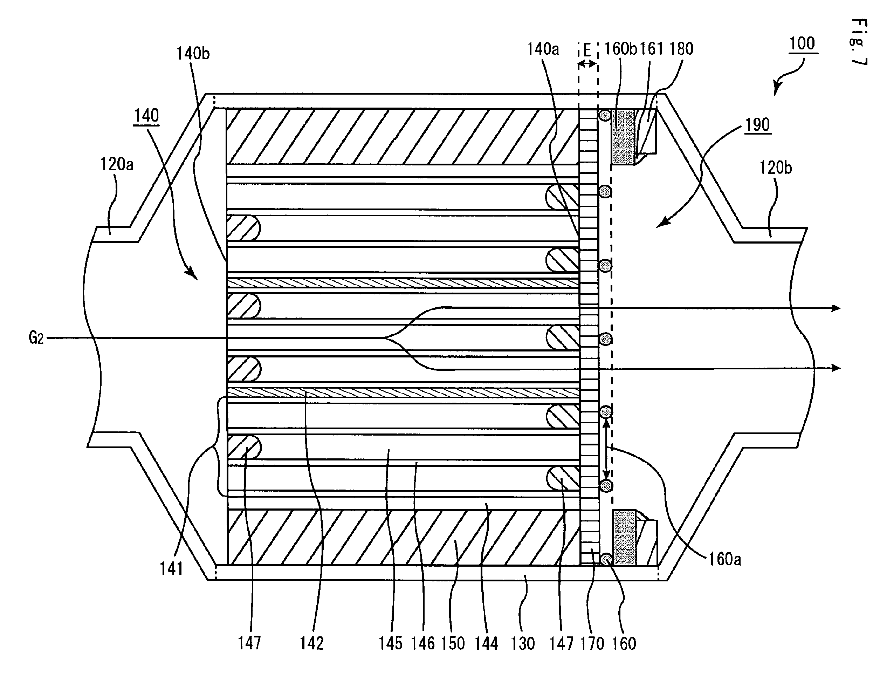

(Second Embodiment)
A second embodiment serving as an embodiment of the present invention will be described below with reference to Fig. 7. Fig. 7 is a schematic cross-sectional view showing a cross-section of an exhaust gas purification apparatus according to the second embodiment cut parallel to the longitudinal direction.
In Fig. 7, exhaust gas is indicated by G₂. Further, the flow of the exhaust gas is indicated by arrows.
Note that in the second embodiment, a honeycomb filter is used as an aggregated honeycomb structured body.

As shown in Fig. 7, an exhaust gas purification apparatus 100 according to the second embodiment includes: a cylindrical casing 130; a cylindrical introduction pipe 120a connected to one end portion of the casing 130 and formed to taper in the neighborhood of a connection portion; an exhaust pipe 120b connected to the other end portion of the casing 130 and having a similar configuration to the introduction pipe 120a; a honeycomb filter 140 disposed in the casing 130; a holding sealing material 150 disposed between the honeycomb filter 140 and the casing 130; a buffer member 170 disposed on an exhaust pipe side end face 140a of the honeycomb filter 140; a stopping member 160 disposed adjacent to the buffer member 170; and a fixing member 180 disposed adjacent to the stopping member 160 and joined to the stopping member 160. Note that the honeycomb filter 140, holding sealing material 150, buffer member 170, stopping member 160, and fixing member 180 disposed in the casing will occasionally be referred to together as a purification portion 190.

Next, the interior configuration of the exhaust gas purification apparatus 100 according to the second embodiment will be described.
In the exhaust gas purification apparatus 100, a distance (indicated by a double-headed arrow E in Fig. 7) between the exhaust pipe side end face 140a of the honeycomb filter 140 and the end face of the stopping member 160 is less than 1 mm.

Further, the stopping member 160 and the fixing member 180 are joined to each other by welding a joint portion 160b of the stopping member 160 to the fixing member 180 (in Fig. 7, the welded part between the joint portion 160b and the fixing member 180 is indicated by 161).

Further, the exhaust pipe 120b is formed to taper toward an end face on a side connected to the outside, and a part of a peripheral portion of the fixing member 180 contacts the exhaust pipe 120b. Thus, the fixing member 180 does not move from its initial disposal position to the exhaust pipe 120b side.

Furthermore, in the purification portion 190 disposed in the casing 130, the buffer member 170 is disposed to contact the entire exhaust pipe side end face 140a of the honeycomb filter 140 (honeycomb fired body 141), as shown in Fig. 7. The buffer member 170 is formed from a fiber body having a plurality of air holes such that exhaust gas can pass through.

A case in which exhaust gas is passed through the exhaust gas purification apparatus 100 of the second embodiment, configured as described above, will now be described.
Exhaust gas G₂ introduced through the introduction pipe 120a flows into one cell 145 that opens onto an end face 140b of the honeycomb filter 140 positioned on the introduction pipe side, and then passes through a cell wall 146 separating the cell 145. At this time, PM contained in the exhaust gas is captured in the interior of the cell wall 146 such that the exhaust gas is purified. The purified exhaust gas then flows out from another cell 145 that opens onto the exhaust pipe side end face 140a. The effluent exhaust gas then passes through the buffer member 170 and an opening 160a in the stopping member 160 to be discharged to the outside through the exhaust pipe 120b.
During this exhaust gas purification process, pressure is applied to the honeycomb filter 140 by the exhaust gas G₂.

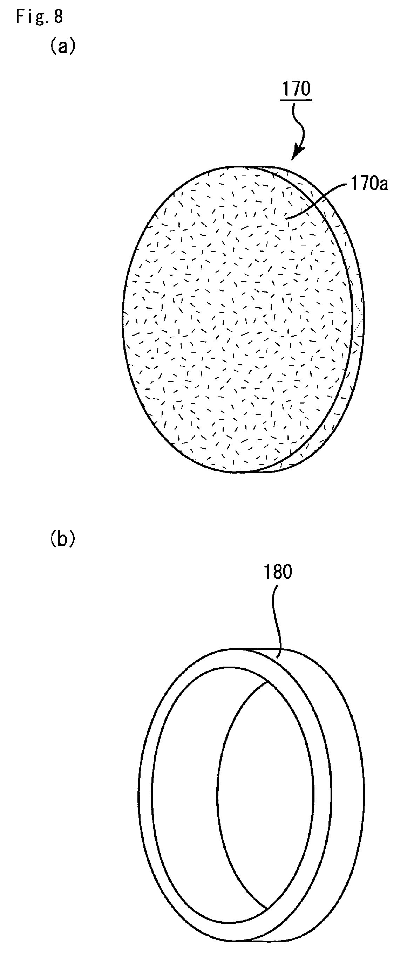

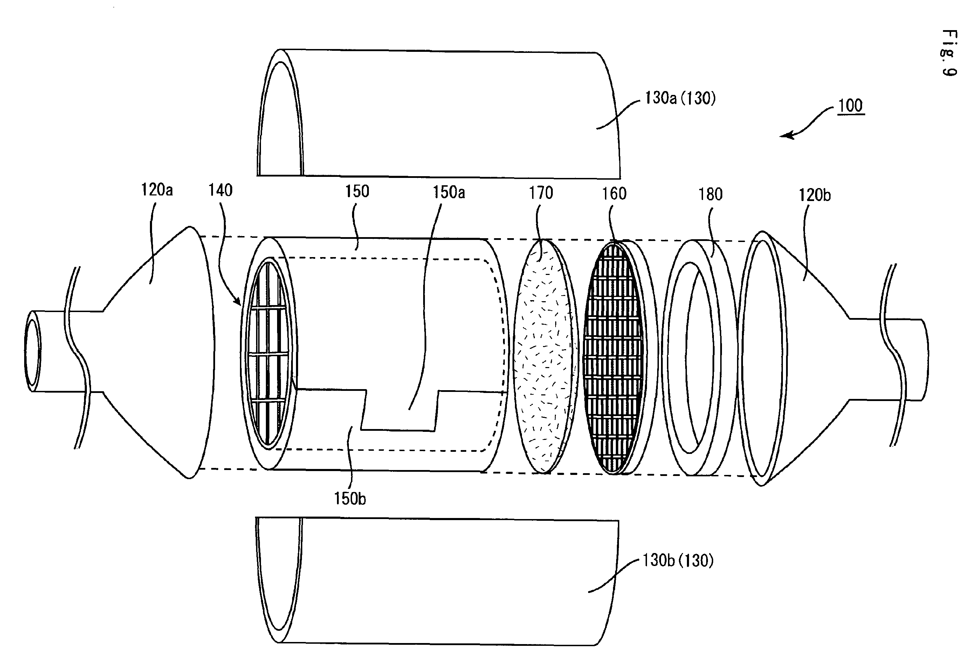

Each member of the exhaust gas purification apparatus 100 described above will now be described in detail with reference to Figs. 8(a), 8(b) and 9.
Fig. 8(a) is a schematic perspective view showing the buffer member of the exhaust gas purification apparatus according to the second embodiment. Fig. 8(b) is a schematic perspective view showing the fixing member of the exhaust gas purification apparatus according to the second embodiment.
Fig. 9 is a schematic perspective view showing a state in which the honeycomb filter, the holding sealing material, the stopping member, and the buffer member and fixing member shown in Figs. 8 (a) and 8 (b) are disposed in the casing to which the introduction pipe and exhaust pipe are connected.
The respective configurations of the honeycomb filter 140, casing 130, holding sealing material 150, stopping member 160, introduction pipe 120a, and exhaust pipe 120b shown in Fig. 9 are described above in the description of the exhaust gas purification apparatus according to the first embodiment, and are therefore not described here.

First, the buffer member 170 will be described. As shown in Fig. 8 (a), the buffer member 170 is a disc-shaped, sheet-form fiber body mainly comprising inorganic fibers such as alumina fibers. The diameter of an end face of the buffer member 170 is substantially identical to the inner diameter of the casing 130 shown in Fig. 9, and the thickness is less than 1 mm.

Next, the fixing member 180 will be described. As shown in Fig. 8(b), the fixing member 180 mainly comprises a metal such as stainless steel, and takes a ring shape having a predetermined thickness. The outer diameter of the fixing member 180 is substantially identical to the inner diameter of the casing 130 shown in Fig. 9, and the inner diameter is slightly larger than the diameter of the end face of the honeycomb filter 140 shown in Fig. 9.

A method for manufacturing the exhaust gas purification apparatus according to the second embodiment will now be described.
First, the honeycomb filter, casing, holding sealing material, stopping member, introduction pipe, and exhaust pipe are manufactured in a similar manner to the method for manufacturing the exhaust gas purification apparatus according to the first embodiment.

Next, a mat material produced by a sheet-forming process of inorganic fibers mainly comprising alumina or the like is processed such that the diameter of an end face of the mat material is substantially identical to the inner diameter of the casing and the thickness is less than 1 mm, whereby a buffer member comprising a sheet-form fiber body is manufactured.

Next, a ring-shaped fixing member in which the outer diameter of an end face thereof is substantially identical to the inner diameter of the casing and the inner diameter of the end face is slightly larger than the diameter of the end face of the honeycomb filter is manufactured by carrying out a punching process on a disc-shaped metal plate mainly comprising a metal such as stainless steel.

A method for manufacturing an exhaust gas purification apparatus using the honeycomb filter and the various members described above will now be described.
First, the holding sealing material is wrapped around the periphery of the honeycomb filter such that the recessed portion and projected portion of the holding sealing material are fitted together. Next, the first casing divided body is disposed such that the inner face thereof is oriented upward, and the honeycomb filter wrapped in the holding sealing material is disposed on the inner face of the first casing divided body. Further, the buffer member is disposed adjacent to one end face of the honeycomb filter. Next, the fixing member, which is joined to the stopping member by carrying out welding at the joint portion, is disposed such that the stopping member is adjacent to the buffer member.

Next, the second casing divided body is placed on the first casing divided body in which the honeycomb filter and the respective members described above are disposed, whereupon the casing divided bodies are compressed from a vertical direction. Once the casing divided bodies have come into contact, the casing divided bodies are joined by welding to form the casing. Note that a joining device such as a screw or a predetermined fitting may be used instead of welding.

Next, the exhaust pipe is connected to the end portion of the casing that is positioned on the stopping member disposal side by welding. Similarly, the introduction pipe is connected to the end portion of the casing on the opposite side to the exhaust pipe connection side.
Through the processes described above, the exhaust gas purification apparatus according to the second embodiment is manufactured.

The effects (1) and (3) described in the first embodiment can be exhibited similarly in the second embodiment.
The second embodiment can also exhibit the following effects.

(4) In the exhaust gas purification apparatus according to the second embodiment, the fixing member for fixing the stopping member is disposed in a predetermined position in the casing. Therefore, the stopping member is unlikely to shift from its initial disposal position.
Hence, even when exhaust gas pressure is applied to the honeycomb filter, movement of a honeycomb fired body from the honeycomb filter to the exhaust pipe side can be prevented reliably. Furthermore, even if a honeycomb fired body moves, the moving honeycomb fired body is stopped reliably upon contact with the stopping member. Therefore, displacement and coming off of the honeycomb fired bodies can be prevented efficiently.

(5) In the exhaust gas purification apparatus according to the second embodiment, the stopping member is joined to the fixing member.
Therefore, the stopping member is unlikely to be displaced from its initial disposal position, and contact between the stopping member and the honeycomb fired body is unlikely to occur.
Hence, damage such as chips and cracks can be prevented from occurring on the end face (exhaust pipe side end face) of the honeycomb filter on which damage is particularly likely to occur.
As a result, a reduction in the purification performance of the honeycomb filter can be prevented.

(6) In the exhaust gas purification apparatus according to the second embodiment, the exhaust pipe side end face of the honeycomb filter contacts the buffer member having a buffering function, and therefore, even when the entire honeycomb filter moves from its initial disposal position to the exhaust pipe side due to exhaust gas pressure, shock such as vibration is unlikely to be applied to the exhaust pipe side end face of the honeycomb filter. Hence, damage can be prevented from occurring on the end face (exhaust pipe side end face) of the honeycomb filter on which damage is particularly likely to occur.
As a result, a reduction in the purification performance of the honeycomb filter can be prevented efficiently.

(Example 2)
(1) Manufacture of honeycomb filter
The honeycomb filter was manufactured in a similar manner to (1) of Example 1.

(2) Manufacture of holding sealing material
The holding sealing material was manufactured in a similar manner to (2) of Example 1.

(3) Manufacture of stopping member
The stopping member was manufactured in a similar manner to (3) of Example 1.

(4) Manufacture of buffer member
A mat material produced by a sheet-forming process of non-expansive alumina fibers was processed to a size of diameter 152 mm × thickness 0.5 mm to manufacture a buffer member comprising a sheet-form fiber body.

(5) Manufacture of fixing member
A ring-shaped fixing member was manufactured to a size of outer diameter 152 mm (inner diameter 142 mm) × thickness 4 mm by carrying out a punching process on a disc-shaped stainless steel metal plate having a size of diameter 152 mm × thickness 4 mm.

(6) Manufacture of exhaust gas purification apparatus
The honeycomb filter wrapped in the holding sealing material was disposed on the inner face of the first casing divided body in a similar manner to Process (4) of Example 1.

Next, the buffer member manufactured in Process (4) was disposed on the inner face of the first casing divided body adjacent to one end face of the honeycomb filter. Next, the fixing member was joined to the joint portion of the stopping member, whereupon the fixing member was disposed on the inner face of the first casing divided body such that the stopping member was adjacent to the buffer member.

The second casing divided body was then placed on the first casing divided body provided with the honeycomb filter and stopping member, whereupon the casing divided bodies were compressed from a vertical direction. When the casing divided bodies came into contact, the casing divided bodies were joined by welding to form a casing.

Next, an exhaust pipe comprising stainless steel and formed in a tapered shape was disposed on the end portion of the casing on the stopping member disposal side, and connected to the end portion of the casing by welding. Similarly, an introduction pipe shaped identically to the exhaust pipe was connected to the end portion of the casing on the opposite side to the exhaust pipe connection side.
Through the processes described above, the exhaust gas purification apparatus according to the second embodiment was manufactured.
Note that in the exhaust gas purification apparatus manufactured in this manner, the distance between the exhaust pipe side end face of the honeycomb filter and the end face of the stopping member was 0.5 mm.
Further, the exhaust pipe was formed in a tapered form, and the fixing member joined to the stopping member contacted a part of the exhaust pipe.

In the exhaust gas purification apparatus according to Example 2, the exhaust pipe side end face of the honeycomb filter is covered by the stopping member. It may therefore be assumed that even when exhaust gas pressure is applied, displacement and coming off of the honeycomb fired bodies can be prevented.
Further, the fixing member for fixing the stopping member is disposed in a predetermined position within the casing, and in addition, the stopping member is joined to the fixing member. It may therefore be assumed that the stopping member is unlikely to shift from its initial disposal position, and that contact between the stopping member and the honeycomb structured body due to movement of the stopping member is unlikely to occur.
Moreover, the distance between the end face of the honeycomb filter and the end face of the stopping member is less than 1 mm. It may therefore be assumed that a reduction in the purification performance of the honeycomb filter can be prevented efficiently.

(Third Embodiment)
Next, a third embodiment serving as an embodiment of the present invention will be described.
In the third embodiment, the stopping member according to the exhaust gas purification apparatus of the second embodiment is not joined to the fixing member.

The effects (1) and (3) described in the first embodiment and the effects (4) and (6) described in the second embodiment can be exhibited similarly in the third embodiment.

(Fourth Embodiment)
Next, a fourth embodiment serving as an embodiment of the present invention will be described using the drawings.

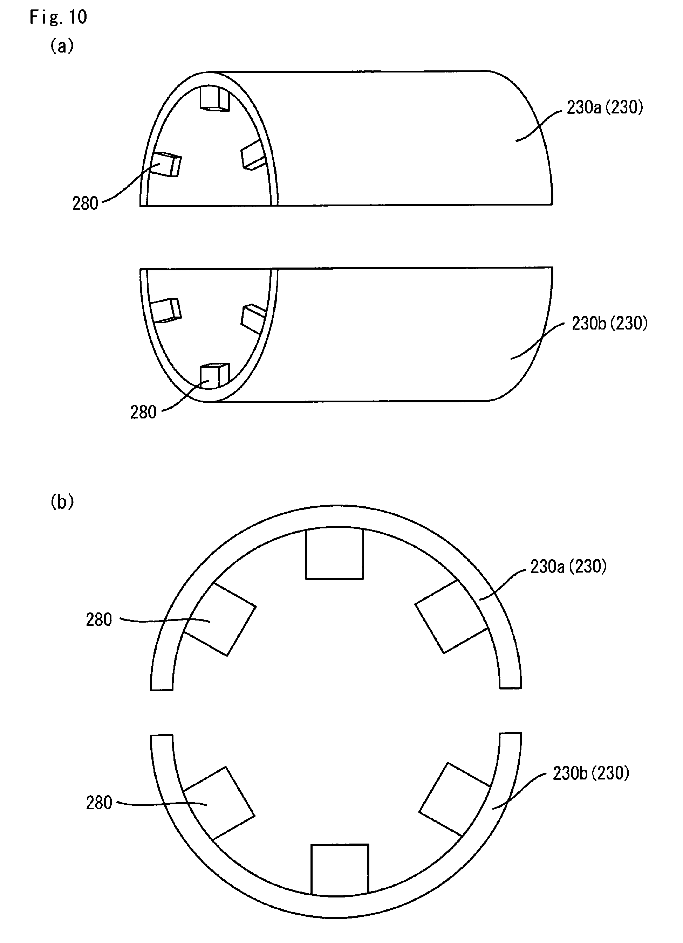

Fig. 10 (a) is a schematic perspective view showing a casing and a fixing member of an exhaust gas purification apparatus according to the fourth embodiment, and Fig. 10 (b) is a schematic side view showing the casing and the fixing member shown in Fig. 10(a).
In the fourth embodiment, the fixing member according to the exhaust gas purification apparatus of the second embodiment is formed from a plurality of fittings formed mainly by a metal such as stainless steel. More specifically, as shown in Figs. 10(a) and 10(b), a fixing member 280 is formed from six fittings, which are welded in predetermined positions within a casing 230 (230a and 230b) along the inner periphery of the casing 230 (230a and 230b) such that gaps between the six fittings are equal. Three fittings are disposed in each casing divided body 230a (230b).
Further, the fittings are joined to a stopping member (not shown) by welding.

The effects (1) and (3) described in the first embodiment and the effects (4) to (6) described in the second embodiment can be exhibited similarly in the fourth embodiment.

(Fifth Embodiment)
Next, a fifth embodiment serving as an embodiment of the present invention will be described.
In the fifth embodiment, a catalyst made of platinum or the like is supported on the honeycomb filter according to the exhaust gas purification apparatus of the first embodiment. Note that methods for supporting a catalyst on the honeycomb filter include a method for immersing the honeycomb filter in a diammine dinitro platinum nitric acid ([Pt (NH₃)₂ (NO₂)₂] HNO₃) solution or the like and then heating the honeycomb filter, for example.

The effects (1), (2) and (3) described in the first embodiment can be exhibited similarly in the fifth embodiment.
The fifth embodiment can also exhibit the following effect.

(7) In the exhaust gas purification apparatus according to the fifth embodiment, a honeycomb filter with a catalyst supported thereon is disposed in the casing.
Hence, by causing the PM captured in the honeycomb filter to contact the catalyst, the captured PM can be burned at lower temperatures. Therefore, in the exhaust gas purification apparatus according to the fifth embodiment, PM contained in the exhaust gas can be removed efficiently.
Moreover, by causing the harmful gas components contained in the exhaust gas to contact the catalyst, the harmful gas components contained in the exhaust gas can be converted.

(Sixth Embodiment)
A sixth embodiment serving as an embodiment of the present invention will now be described.
In the sixth embodiment, a casing is provided with a purification portion formed by a catalyst supporting carrier in which the honeycomb filter according to the exhaust gas purification apparatus of the second embodiment is formed such that one of the end portions of each of the cells is not sealed, a holding sealing member disposed between the catalyst supporting carrier and the casing, a buffer member disposed on the exhaust pipe side end face of the catalyst supporting carrier, a stopping member disposed adjacent to the buffer member, and a fixing member disposed adjacent to the stopping member and joined to the casing. Further, a catalyst may be supported on the catalyst supporting carrier.

A method for manufacturing the catalyst supporting carrier according to the exhaust gas purification apparatus of the sixth embodiment will now be described.

First, inorganic particles such as alumina or silica particles, inorganic fibers such as alumina or silica fibers, and an inorganic binder such as silica sol are mixed to prepare a wet mixture. As necessary and in accordance with formability, an organic binder such as carboxymethyl cellulose, a dispersion medium such as water, a lubricant such as polyoxyethylene monobutyl ether, and a forming auxiliary such as ethylene glycol are appropriately added thereto. Extrusion molding is then carried out using the prepared wet mixture to manufacture a raw molded body. The raw molded body is then dried to manufacture a ceramic dried body.

An aggregated honeycomb structured body is then manufactured using a similar method to the method for manufacturing the honeycomb filter according to the exhaust gas purification apparatus of the first embodiment, except that predetermined cells of the ceramic dried body are not sealed and the firing temperature is between 500 and 1200°C.
The obtained aggregated honeycomb structured body forms a catalyst supporting carrier in which one of the end portions of each of the cells is not sealed.

Next, the catalyst supporting carrier is caused to support a catalyst using an identical method to the method for causing the honeycomb filter according to the exhaust gas purification apparatus of the fifth embodiment to support a catalyst. Through the processes described above, the catalyst supporting carrier with a catalyst supported thereon is manufactured.
Note that an identical catalyst to the catalyst described in the fifth embodiment may be used as the catalyst of the sixth embodiment.

Effects of the exhaust gas purification apparatus according to the sixth embodiment will be listed below. (8) In the exhaust gas purification apparatus according to the sixth embodiment, the catalyst supporting carrier is disposed in the casing, with one of the end portions of each of the cells in the aggregated honeycomb structured body not being sealed. Furthermore, a catalyst may be supported on the catalyst supporting carrier.
Hence, the exhaust gas purification apparatus according to the sixth embodiment is capable of converting harmful gas components contained in the exhaust gas.

(9) Furthermore, for similar reasons to those described in the effects (1) to (3) of the first embodiment, the exhaust gas purification apparatus according to the sixth embodiment can maintain a high level of PM capture efficiency and harmful gas component conversion efficiency over a long time period.

(Seventh Embodiment)
Next, the interior configuration of an exhaust gas purification apparatus according to a seventh embodiment serving as an embodiment of the present invention will be described with reference to Fig. 11.
Fig. 11 is a schematic cross-sectional view showing a cross-section of the exhaust gas purification apparatus according to the seventh embodiment cut parallel to the longitudinal direction.

As shown in Fig. 11, an exhaust gas purification apparatus 300 according to the seventh embodiment includes a casing 330, an introduction pipe 320a, an exhaust pipe 320b, and a first purification portion 390 and a second purification portion 190 disposed in the casing 330.

The interior configuration of the exhaust gas purification apparatus 300 according to the seventh embodiment will now be described using the drawings.
As shown in Fig. 11, the first purification portion 390, which has an identical configuration to the purification portion according to the exhaust gas purification apparatus of the sixth embodiment except that a buffer member is not provided and the stopping member is not joined to the fixing member, is disposed on the introduction pipe 320a side of the casing 330. More specifically, a catalyst supporting carrier 340, a holding sealing material 350 disposed between the catalyst supporting carrier 340 and the casing 330, a stopping member 360 disposed on an exhaust pipe side end face 340a of the catalyst supporting carrier 340, and a fixing member 380 disposed adjacent to the stopping member 360 are provided in the first purification portion 390.
Further, the fixing member 380 is joined to the casing 330 by a screw, a predetermined fitting, or the like.

Meanwhile, the second purification portion 190, which has an identical configuration to the purification portion according to the exhaust gas purification apparatus of the second embodiment except that a buffer member is not provided and the stopping member is not joined to the fixing member, is disposed on the exhaust pipe 320b side of the casing 330. More specifically, a honeycomb filter 140, a holding sealing material 150 disposed between the honeycomb filter 140 and the casing 330, a stopping member 160 disposed on an exhaust pipe side end face 140a of the honeycomb filter 140, and a fixing member 180 disposed adjacent to the stopping member 160 are provided in the second purification portion 190.
Further, the fixing member 180 is joined to the casing 330 by a screw, a predetermined fitting, or the like.

In the exhaust gas purification apparatus 300 of the seventh embodiment, having the configuration described above, exhaust gas (in Fig. 11, the exhaust gas is indicated by G₃, and the flow of the exhaust gas is indicated by arrows) introduced through the introduction pipe 320a passes through the catalyst supporting carrier 340 and then passes through the honeycomb filter 140 to be discharged to the outside through the exhaust pipe 320b.
During this exhaust gas purification process, pressure is applied to the catalyst supporting carrier 340 and the honeycomb filter 140 by the exhaust gas G₃.

A method for manufacturing the exhaust gas purification apparatus according to the seventh embodiment will now be described.
First, a catalyst supporting carrier manufactured using a similar method to the method for manufacturing the catalyst supporting carrier according to the exhaust gas purification apparatus of the sixth embodiment and a honeycomb filter manufactured using a similar method to the method for manufacturing the honeycomb filter according to the exhaust gas purification apparatus of the first embodiment are prepared.

Next, the first purification portion is disposed on the inner face of a first casing divided body in a similar manner to the second embodiment, except that the buffer member is not used and the fixing member and stopping member are not fixed.

Next, the second purification portion is disposed adjacent to the first purification portion in a similar manner to the second embodiment, except that the buffer member is not used and the fixing member and stopping member are not fixed. In this case, the second purification portion is disposed such that an end face of the catalyst supporting carrier of the first purification portion on the side where the various members are disposed and an end face of the honeycomb filter of the second purification portion on the side where the various members are disposed are oriented in an identical direction.

Next, a second casing divided body is placed on the casing divided body provided with the catalyst supporting carrier, the honeycomb filter, and the various members, whereupon the casing divided bodies are compressed from a vertical direction. Once the casing divided bodies have come into contact, the casing divided bodies are joined by welding to form the casing.
Note that a joining device such as a screw or a predetermined fitting may be used instead of welding.
Next, the fixing member of the first purification portion and the fixing member of the second purification portion are joined respectively to the casing using a screw, a predetermined fitting, or the like.

Finally, the exhaust gas purification apparatus according to the seventh embodiment is manufactured by carrying out a similar connection process to that of the method for manufacturing the exhaust gas purification apparatus according to the second embodiment.
In the exhaust gas purification apparatus according to the seventh embodiment manufactured in this manner, the first purification portion (catalyst supporting carrier) is positioned on the introduction pipe side. Further, the second purification portion (honeycomb filter) is positioned on the exhaust pipe side, or in other words downstream of the catalyst supporting carrier.

Effects of the exhaust gas purification apparatus according to the seventh embodiment will be listed below.
In the exhaust gas purification apparatus according to the seventh embodiment, a purification portion having an identical configuration to the purification portion of the sixth embodiment, except that the buffer member is not provided and the stopping member and fixing member are not joined, is used as the first purification portion, and therefore the effects (8) and (9) described in the sixth embodiment can be exhibited.
Further, a purification portion having an identical configuration to the purification portion of the second embodiment, except that the buffer member is not provided and the stopping member and fixing member are not joined, is used as the second purification portion, and therefore the effect (4) described in the second embodiment can be exhibited.
Moreover, the following effects can be exhibited.

(10) In the exhaust gas purification apparatus according to the seventh embodiment, from among the end faces of the catalyst supporting carrier of the first purification portion and the honeycomb filter of the second purification portion, the end faces positioned on the respective exhaust pipe sides are covered by the stopping members.
Hence, a part of the honeycomb fired bodies of the catalyst supporting carrier is not pushed out to the exhaust pipe side when exhaust gas pressure is applied. As a result, the honeycomb fired bodies are unlikely to collide with the honeycomb filter disposed downstream of the catalyst supporting carrier, and damage to the entire honeycomb filter can be prevented.
Thus, a reduction in the conversion performance of the honeycomb filter can be prevented.

(11) In the exhaust gas purification apparatus according to the seventh embodiment, the catalyst supporting carrier is disposed further toward the introduction pipe side than the honeycomb filter.
Therefore, heat generated when the catalyst supporting carrier converts harmful gas components contained in the exhaust gas can be used easily during PM combustion in the honeycomb filter positioned downstream of the catalyst supporting carrier. As a result, PM contained in the exhaust gas can be removed extremely efficiently.

(Other embodiments)
The stopping member of the exhaust gas purification apparatus according to the present invention is preferably formed by a material that is unlikely to be eroded by a flow of exhaust gas.
Specifically, this material is not limited to the above-described stainless steel, and includes carbon steel, titanium, iron, aluminum, and the like. When the stopping member comprises carbon steel, nickel plating is preferably carried out on the surface of the stopping member.

When a stopping member comprising wire mesh is used as the stopping member, the kind of the wire mesh is not limited to the above-described plain weave wire mesh, and instead, twill weave wire mesh, crimped wire mesh, lock-crimped wire mesh, ton-cap weave wire mesh, ty-rod weave wire mesh, and the like, for example, may be used.

The stopping member is not limited to the above-described wire mesh, and may be a punching metal or the like formed by carrying out a punching process on a metal plate, for example, to form openings (round holes) of a predetermined size over substantially the entire end face.
Further, the openings formed in the punching metal are not limited to the above-described round holes, and may be square holes, hexagonal holes, rectangular holes, elongated round holes, rhombic holes, cross holes, combination of round holes and cross holes, and the like. Moreover, the openings are not limited to the above-described straight arrangement, and may be formed in a 60° staggered arrangement, a 45° staggered arrangement, and the like.

There are no particular limitations on the shape of the fixing member of the exhaust gas purification apparatus according to the present invention, and instead of the above-described ring shape, an L shape or the like may be used. In this case, a plurality of fixing members are preferably disposed in the casing so that the stopping member can be fixed more rigidly.

There are no particular limitations on the materials of the casing, fixing member and introduction pipe of the exhaust gas purification apparatus according to the present invention, and instead of the above-described stainless steel, metals such as aluminum and iron, for example, may be used.

The casing of the exhaust gas purification apparatus according to the present invention is not limited to a cylindrical shape, and may take any tubular shape, such as an elliptical shape, a triangular shape, a hexagonal shape, an octagonal shape, or a dodecagonal shape, when seen from above.
Further, the cylindrical casing may be a cylindrical casing that is divided into a plurality of pieces along the longitudinal direction (i.e. a clam shell-type casing) or a cylindrical casing having a C-shaped or U-shaped cross-section in which a slit (opening portion) extending in the longitudinal direction is formed in only one location.
The shape of the stopping member, and the shape of the buffer member and fixing member provided as necessary, may be modified appropriately in accordance with the shape of the casing.

The main component of the material of the honeycomb filter is not limited to silicon carbide, and may be another ceramic raw material, for example a nitride ceramic such as aluminum nitride, silicon nitride, boron nitride, or titanium nitride, a carbide ceramic such as zirconium carbide, titanium carbide, tantalum carbide, or tungsten carbide, a complex of a metal and nitride ceramic, a complex of a metal and carbide ceramic, and the like.
Further, a ceramic raw material such as a silicon-containing ceramic, in which metal silicon is mixed with the above-described ceramics, and a ceramic joined by silicon or a silicate compound may also be used as the material of the honeycomb filter.

The inorganic particles included in the material of the catalyst supporting carrier are not limited to the above-described inorganic particles comprising alumina or silica, and may be inorganic particles comprising zirconia, titania, ceria, mullite, zeolite, and the like. These inorganic particles may be used singly or in combinations of two or more kinds. Of these kinds, inorganic particles comprising alumina and ceria are particularly preferable.

The inorganic fibers included in the material of the catalyst supporting carrier is not limited to the above-described inorganic fibers comprising alumina or silica, and may be inorganic fibers or whiskers comprising silicon carbide, silica-alumina, glass, potassium titanate, aluminum borate, and the like. These may be used singly or in combinations of two or more kinds. Of the above-described inorganic fibers, inorganic fibers comprising aluminum borate whiskers are preferable.
Note that in this description, the inorganic fibers and whiskers are assumed to have an aspect ratio (length/diameter) of more than 5. The aspect ratio of the inorganic fibers and whiskers is preferably between 10 and 1000.

There are no particular limitations on firing conditions when manufacturing the catalyst supporting carrier, but 500 to 1200°C is preferable, and 600 to 1000°C is more preferable.
The reason for this is that when the firing temperature is less than 500°C, the adhesive function of the inorganic binder is less likely to appear and sintering of the inorganic particles and the like is less likely to advance, leading to a reduction in the strength of the honeycomb fired body. When the firing temperature is more than 1200°C, sintering of the inorganic particles and the like advances excessively, leading to a reduction in specific surface area per unit volume, and as a result, the catalyst component supported on the catalyst supporting carrier when a honeycomb structured body comprising honeycomb fired bodies is used as the catalyst supporting carrier for converting the exhaust gas cannot be dispersed to a sufficiently high degree.
With respect to the catalyst supporting carrier, there may be used a carrier in which the honeycomb structured body itself has a catalytic function. There may also be used a carrier in which the honeycomb structured body itself does not have a catalytic function and the honeycomb structured body obtains the catalytic function as the catalyst is supported thereon.

The aggregated honeycomb structured body (unless otherwise indicated, it is assumed in the following description that the aggregated honeycomb structured body includes a honeycomb filter and a catalyst supporting carrier) of the exhaust gas purification apparatus according to the present invention is not limited to a round pillar shape, and may take any pillar shape such as a cylindroid shape or a polygonal pillar shape.

The catalyst supported on the aggregated honeycomb structured body of the exhaust gas purification apparatus according to the present invention is not limited to the above-described platinum catalyst, and a noble metal such as palladium or rhodium, an alkali metal such as potassium or sodium, an alkali-earth metal such as barium, or a metal oxide, for example, may be used instead. These catalysts may be used singly or in combinations of two or more kinds.

Further, there are no particular limitations on the above-described metal oxide as long as it is capable of reducing the combustion temperature of the PM, and a composite oxide represented by CeO₂, ZrO₂, FeO₂, Fe₂O₃, CuO, CuO₂, Mn₂O₃, MnO, the composition formula AₙB₁₋ₙCO₃ (in the formula, A is La, Nd, Sm, Eu, Gd or Y, B is an alkali metal or alkali-earth metal, and C is Mn, Co, Fe or Ni) or the like, for example, may be used instead.
These metal oxides may be used singly or in combinations of two or more kinds, and a metal oxide containing at least CeO₂ is preferable.
When this kind of metal oxide is supported, the combustion temperature of the PM can be reduced.

As a method for supporting a catalyst on the aggregated honeycomb structured body, a method for forming a catalyst supporting layer comprising an alumina film on the surface of the aggregated honeycomb structured body and supporting a catalyst on the alumina film (layer) or the like may be employed instead of the above-described method for immersing the aggregated honeycomb structured body in a solution containing a catalyst and then heating the aggregated honeycomb structured body, or the like.
Examples of methods for forming an alumina film (layer) include a method for immersing the aggregated honeycomb structured body in a metallic compound solution containing aluminum, such as Al(NO₃)₃, and then heating the aggregated honeycomb structured body, and a method for immersing the aggregated honeycomb structured body in a solution containing alumina powder and then heating the aggregated honeycomb structured body, or the like.
Further, examples of methods for supporting a catalyst on the alumina film (layer) include a method for immersing the aggregated honeycomb structured body formed with the alumina film in a solution containing a noble metal, an alkali metal, an alkali-earth metal, or a metal oxide, or the like, and then heating the aggregated honeycomb structured body.

## Claims

1. An exhaust gas purification apparatus, comprising: a honeycomb structured body formed by binding together a plurality of pillar-shaped honeycomb fired bodies, in which a large number of cells separated by cell walls are disposed in parallel in a longitudinal direction, by interposing an adhesive layer;
a casing to which an introduction pipe for introducing an exhaust gas and an exhaust pipe for discharging said exhaust gas are connected, said honeycomb structured body being disposed in the interior of said casing;
a holding sealing material disposed between said honeycomb structured body and said casing for holding said honeycomb structured body; and
a stopping member having a plurality of openings and disposed in said casing,
wherein
of end faces of said honeycomb structured body, at least an end face positioned on said exhaust pipe side is covered by said stopping member.

2. The exhaust gas purification apparatus according to claim 1, further comprising
a fixing member used for fixing said stopping member and disposed in said casing.

3. The exhaust gas purification apparatus according to claim 2,
wherein
said stopping member is joined to said fixing member.

4. The exhaust gas purification apparatus according to claim 1,
wherein said stopping member is joined to said casing.

5. The exhaust gas purification apparatus according to any of claims 1 to 4, further comprising
a buffer member disposed between said honeycomb structured body and said stopping member.

6. The exhaust gas purification apparatus according to any of claims 1 to 5,
wherein
said honeycomb structured body is a honeycomb filter in which one of end portions of each of said cells is sealed.

7. The exhaust gas purification apparatus according to any of claims 1 to 5,
wherein
said honeycomb structured body is a catalyst supporting carrier in which said one of end portions of each of said cells is not sealed.

8. The exhaust gas purification apparatus according to claim 6 or 7,
wherein
a catalyst is supported on said honeycomb structured body.

9. The exhaust gas purification apparatus according to any of claims 1 to 8,
wherein
a plurality of honeycomb structured bodies are disposed in said casing, and of end faces of each of said honeycomb structured bodies, at least an end face positioned on said exhaust pipe side is covered by said stopping member.

10. The exhaust gas purification apparatus according to claim 9,
wherein
said plurality of honeycomb structured bodies include at least one honeycomb filter and at least one catalyst supporting carrier, and
said catalyst supporting carrier is disposed further toward said introduction pipe side than said honeycomb filter.

11. The exhaust gas purification apparatus according to any of claims 1 to 10,
wherein
a distance between an end face of said honeycomb structured body and an end face of said stopping member is less than 1 mm.
